# EUROPÄISCHE PATENTSCHRIFT

(11) **EP 2 558 279 B1**
(45) Veröffentlichungstag und Bekanntmachung des Hinweises auf die Patenterteilung: **06.08.2014**
(21) Anmeldenummer: 11718920.9
(22) Anmeldetag: 07.04.2011
(51) Int. Cl.: B29C 70/44

(54) **VERFAHREN UND VORRICHTUNG ZUR HERSTELLUNG EINES KOMPOSIT-FORMTEILS AUS FASERVERSTÄRKTEM KUNSTSTOFF**
METHOD AND DEVICE FOR PRODUCING A COMPOSITE MOLDED PART FROM FIBER-REINFORCED PLASTIC
PROCÉDÉ ET DISPOSITIF POUR LA PRODUCTION D'UNE PIÈCE MOULÉE COMPOSITE À PARTIR D'UNE MATIÈRE SYNTHÉTIQUE RENFORCÉE DE FIBRES

(30) Priorität: 10.04.2010 DE 102010014545
(43) Veröffentlichungstag der Anmeldung: 20.02.2013
(73) Patentinhaber: Premium AEROTEC GmbH, 86179 Augsburg (DE); EADS Deutschland GmbH, 85521 Ottobrunn (DE)
(72) Erfinder: LLOPART PRIETO, Llorenc, 80807 München (DE); NEUMAIER, Rainer, 85716 Unterschleißheim (DE); SCHOLLER, Jochen, 86845 Großaitingen (DE); KLUG, Markus, 85521 Dachau (DE)
(86) Internationale Anmeldenummer: PCT/DE2011/000379
(87) Internationale Veröffentlichungsnummer: WO 2011/124216

(56) Entgegenhaltungen:
- WO-A2-2005/113213
- US-A- 5 236 646
- US-A1- 2008 308 210

## Beschreibung

### TECHNISCHES GEBIET

Die vorliegende Erfindung betrifft ein Verfahren und eine Vorrichtung zur Herstellung eines Komposit-Formteils aus faserverstärktem Kunststoff. Das erfindungsgemäße Verfahren und die erfindungsgemäße Vorrichtung finden insbesondere Anwendung bei der Herstellung von Leichtbaustrukturen mittels faserverstärktem Kunststoff, insbesondere mittels kohlefaserverstärktem Kunststoff und entsprechenden Verbundwerksstoffen.

Die Herstellung von sogenannten Prepreg-Systemen aus mit einem Matrixmaterial vorimprägnierten Fasern erfolgt üblicherweise in einem Autoklaven, wobei unter Einfluss von Unterdruck und Temperatur ein Aushärtprozess des Matrixmaterials eines geformten Prepreg-Halbzeugs stattfindet. Zur Durchführung von in-situ-Reparaturen, beispielsweise an Flugzeugen, ist dieses Verfahren jedoch nicht geeignet, da das gesamte Flugzeug verständlicherweise nicht in einen Autoklaven verbracht werden kann. Derartige Reparaturen müssen somit nach einem anderen Verfahren außerhalb eines Autoklaven durchgeführt werden. Solche sogenannten "out-of-autoclave"-Prozesse sind im Stand der Technik bekannt. Die mechanischen Eigenschaften und insbesondere die Festigkeit solcher außerhalb eines Autoklaven hergestellter Komposit-Formteile sind jedoch deutlich schlechter als bei Formteilen, die in einem Autoklaven ausgehärtet worden sind.

### STAND DER TECHNIK

Aus der wissenschaftlichen Veröffentlichung "Out-of-Autoclave Processable Prepregs and Resin Films: An Overview of Recent Developments and Shared Database", Ridgard C., SAE technical paper series, Nr. 2006-01-3164, ist es bekannt, Komposit-Bauteile aus Prepreg-Material in Unterdruck-Wärmebeuteln auszuhärten, um beispielsweise Prototypen herzustellen. Die Festigkeit von auf diese Weise hergestellten Komposit-Bauteilen entspricht nicht der Festigkeit von in einem Autoklaven gebackenen Bauteilen, reicht aber häufig für den Prototypenbau aus. Es ist zwar mittlerweile möglich, Prepreg-Materialien herzustellen, die in ihrer Faserdichte und Porosität an in einem Autoklaven ausgehärtete Prepreg-Materialien herankommen, deren mechanische Eigenschaften, insbesondere bei Druckbelastungen oder bei Stoßbelastungen, aber schlechter sind als bei den im Ofen ausgehärteten Prepreg-Materialien, da z. B. ein anderer Kunststoff als Matrix-Material verwendet wird.

Nachteilig ist bei sogenannten out-of-autoclave-Prepreg-Systemen, dass diese zur Erzielung einer geringen Porosität und eines hohen Faservolumenanteils ein Matrixmaterial von geringer Viskosität aufweisen müssen. Dies führt dazu, dass die mechanische Festigkeit der daraus hergestellten Produkte geringer ist, als in einem Autoklaven ausgehärtete Produkte, sodass der out-of-autoclave-Prozess nicht für Reparaturzwecke geeignet ist, bei welchen eine hohe mechanische Belastbarkeit erzielt werden muss.

Parallel zur Entwicklung von out-of-autoclave-Prepregs wurden auch neue Verfahren zur Einleitung von Matrixmaterial in trockenes Fasermaterial entwickelt. Eines dieser neuartigen Verfahren ist der sogenannte "vacuum assisted process" (VAP), der beispielsweise in der Literaturquelle "Principles of the Vacuum Assisted Process and its application for Aerospace components", Körwien T., ISCM 06 ("3rd International Symposium on Composites Manufacturing Technology for Aircraft Structures", 17. bis 18. Mai 2006) bekannt ist. Bei diesem Verfahren des vakuum-unterstützten Prozesses wird ein trockenes Fasermaterial mit einer gasdurchlässigen mikroporösen Membran abgedeckt, die eine Barriere für das Matrixmaterial aus Kunstharz bildet. Durch Aufbringen eines Unterdrucks wird das Matrixmaterial aus einem Vorratsbehälter in das trockene Fasermaterial hineingesaugt. Eine spezielle Variante des VAP-Verfahrens beschreibt die EP 1 393 883 A1, bei der sowohl der Lüfterraum zwischen Membran und äußerem Vakuumsack als auch der Injektionsraum zwischen herzustellendem Bauteil und Membran getrennt evakuierbar sind.

Eine andere Verbesserung des Aushärtprozesses von Prepregs ist das sogenannte Doppelvakuumbeutelverfahren (DVB), das z. B. aus der WO2005/113213 A2 oder der Literaturstelle "NASA *LAR-16877* Double-Vacuum-Bag Process for Making Resin-Matrix Composites" bekannt ist. WO 2005/113213 offenbart die Merkmale des Oberbegiffs des Anspruchs 6. Bei diesem Verfahren wird ein Komposit-Formteilrohling aus einem Prepreg-Material bestehend aus mit einem Matrixmaterial vorimprägnierten Fasern zwischen zwei metallenen Formplatten gelegt und diese Anordnung wird dann von einem Vakuumbeutel umschlossen, der einen inneren Beutel bildet, welcher auf einer der Formplatten abdichtend befestigt ist. Das Innere dieses inneren Beutels ist mit einer Vakuumpumpe verbunden. Über dieser Anordnung wird ein Werkzeug platziert, das die Gestalt eines umgedrehten perforierten Bechers besitzt. Außerhalb dieses Beutels wird ein weiterer Vakuumbeutel als äußerer Vakuumbeutel um die Gesamtanordnung gelegt. Auch dieser äußere Vakuumbeutel ist mit seinem Inneren an eine Vakuumpumpe angeschlossen. Diese Gesamtanordnung wird dann in einem Heißluftofen platziert und einem vorgegebenen Aushärtprozess unterworfen. Dabei wird zunächst auf den äußeren Beutel ein Unterdruck aufgebracht, sodass dieser sich an das Äußere der becherförmigen Struktur anlegt, wodurch in dem verbleibenden Raum außerhalb des inneren Beutels ein Unterdruck entsteht. Dann wird ein geringerer Unterdruck auf das Innere des inneren Beutels aufgebracht. Der den inneren Beutel umgebende stärkere Unterdruck verhindert dabei, dass der innere Beutel auf das auszuhärtende Formteil kollabiert. Der im Inneren des inneren Beutels herrschende Unterdruck sorgt dafür, dass beim Aushärtprozess entstehende Gase aus dem Prepreg-Material austreten und nicht als Gasblasen während des Aushärtens im Material eingeschlossen werden. Nach einer vorgegebenen Zeitdauer wird das Innere des äußeren Beutels wieder dem Umgebungsdruck ausgesetzt, wodurch der innere Beutel auf das Formteil kollabiert und dieses mechanisch komprimiert. Es folgt dann ein weiterer Aushärtprozess für eine vorgegebene Zeit bei einer höheren Temperatur. Nachteilig bei diesem Verfahren ist der komplizierte Aufbau mittels der becherförmigen Stützstruktur für den äußeren Vakuumbeutel.

Das Doppelvakuumbeutelverfahren DVB erreicht nicht die hohe mechanische Festigkeit, die Prepregs besitzen, die in einem Autoklaven ausgehärtet worden sind.

Aus der DE 10 2008 006 261 B3 ist ein mehrlagiges, flexibles Flächenmaterial bekannt, welches eine gasdurchlässige Membran und eine auf dieser Membran auflaminierte Textillage aufweist, die eine Gasführungsstruktur bildet. Auf der von der Membran abgewandten Seite der Textillage kann zudem eine gasundurchlässige Schicht aufgebracht sein.

Die DE 10 2008 015 070 B3 beschreibt ein Verfahren zur Herstellung von Faserverbundbauteilen, das speziell für die Anwendung in einem Autoklaven ausgelegt ist. Dazu ist innerhalb eines äußeren Vakuumraums ein innerer Bauteilraum vorhanden, wobei die beiden Räume miteinander verbunden sind, so dass sie gemeinsam evakuierbar sind. Unter erhöhtem Außendruck während der Aushärtephase des Bauteils schließt sich die Verbindung zwischen den beiden Räumen automatisch, so dass kein Infusionsharz aus dem Bauteilraum austreten kann.

### DARSTELLUNG DER ERFINDUNG

Es ist daher die Aufgabe der vorliegenden Erfindung, ein Verfahren und eine Vorrichtung zur Herstellung eines Komposit-Formteils aus faserverstärktem Kunststoff anzugeben, das bzw. die auch zur Reparatur von in einem Autoklaven ausgehärteten Komposit-Formteilen geeignet ist.

Die das Verfahren betreffende Aufgabe wird gelöst von dem im Patentanspruch 1 angegebenen Verfahren.

Dieses erfindungsgemäße Verfahren weist die folgenden Schritte auf:
a) Bereitstellen eines Prepreg-Halbzeugs bestehend aus mit einem Matrixmaterial vorimprägnierten Fasern;
b) Umhüllen des Prepreg-Halbzeugs mit einem flexiblen Flächenmaterial, das eine gasdurchlässige, aber das Matrixmaterial zurückhaltende Membran sowie zumindest eine innere flächige Gasführungseinrichtung aufweist;
c) Umhüllen der aus Prepreg-Halbzeug und Flächenmaterial gebildeten inneren Anordnung mit einer ersten gasdichten Umhüllung;
d) Positionieren der mit der ersten gasdichten Umhüllung versehenen inneren Anordnung auf einer Formfläche eines ersten Formwerkzeugs;
e) Umhüllen der mit der ersten gasdichten Umhüllung versehenen inneren Anordnung und der Formfläche mit einer zweiten gasdichten Umhüllung;
f) Aufbringen eines ersten Unterdrucks auf die innere flächige Gasführungseinrichtung und das Innere der ersten gasdichten Umhüllung;
g) Erwärmen der gesamten Anordnung für eine erste vorgegebene Zeit unter Einwirkung einer ersten vorgegebenen Temperatur;
h) Aufbringen eines zweiten Unterdrucks auf das Innere der zweiten gasdichten Umhüllung; und
i) Erwärmen der gesamten Anordnung für eine zweite vorgegebene Zeit unter Einwirken einer zweiten vorgegebenen Temperatur.

### VORTEILE

Durch dieses erfindungsgemäße Verfahren wird ein qualitativ hochwertiges Komposit-Formteil von geringer Porosität und hohem Faservolumenanteil erhalten.

Durch die Verwendung einer inneren flächigen Gasführungseinrichtung auf der das Prepreg-Halbzeug umhüllenden Membran wird auf besonders einfache Weise eine zuverlässige Ausgasung von während dem Aushärtprozess im Prepreg-Halbzeug entstehenden Dämpfen in den Schritten f) und g) gewährleistet. Das sich daran anschließende Aufbringen des zweiten Unterdrucks auf das Innere der zweiten gasdichten Umhüllung im Schritt h) sorgt zusammen mit dem Erwärmen der gesamten Vorrichtung im Schritt i) dafür dass ein hoher Faservolumenanteil und eine geringe Porosität im Komposit-Formteil erhalten werden.

Weiterhin können die Verarbeitungszeit und die Verfahrenstemperaturen reduziert werden. Auch die Gefahr, bei einem Reparaturverfahren Ausschuss zu erzeugen, sinkt mit dem erfindungsgemäßen Verfahren deutlich. Für den Aushärtprozess wird kein hoher Druck benötigt und die erhaltenen mechanischen Eigenschaften sind mit denen vergleichbar, die bei einer Aushärtung in einem Autoklaven erzielt werden. Dadurch werden auch ein niedrigerer Energieverbrauch und geringere Werkzeugkosten aufgrund der geringeren Verarbeitungsdrücke erzielt.

Das erfindungsgemäße Verfahren eignet sich daher besonders für in-situ-Reparaturen.

Weitere vorteilhafte Ausführungen des erfindungsgemäßen Verfahrens werden in den Ansprüchen 2 bis 5 angegeben.

Bei einer bevorzugten Weiterbildung des erfindungsgemäßen Verfahrens wird nach dem Schritt b) der folgende Verfahrensschritt durchgeführt:
b') Anordnen von zumindest einer Gasführungsstruktur an der Außenseite, vorzugsweise an den seitlichen Kanten, von zumindest einem Oberflächenbereich der Membran.

Dieses Vorsehen einer inneren Gasführungsstruktur an der Außenseite von zumindest einem Oberflächenbereich der inneren Gasführungseinrichtung sorgt dafür, dass die durch die Gasführungseinrichtung aus dem Prepreg-Halbzeug austretenden Gase schnell und gleichmäßig durch das auf die Gasführungsstruktur aufgebrachte Vakuum austreten können. Hierbei ist besonders zu berücksichtigen, dass sich bei Prepregs eingeschlossene Luft generell vor allem zwischen den einzelnen Schichten befindet. Durch die Anordnung der Gasführungsstrukturen an den Rändern oder Kanten des Prepreg-Halbzeugs wird eine Absaugung realisiert, die gewährleistet, dass die eingeschlossene Luft horizontal zwischen den einzelnen Prepreg-Lagen und über die Ränder oder Kanten des Prepreg-Halbzeugs abgesaugt werden kann. Zusätzlich zu dieser Absaugung in horizontaler Richtung werden auch flüchtige Bestandteile flächig durch die Membran hindurch (also in vertikaler Richtung) abgesaugt.

Bei einer anderen bevorzugten Ausführungsform des erfindungsgemäßen Verfahrens wird nach dem Schritt d) der folgende Schritt durchgeführt:
d') Anordnen von zumindest einer zweiten Gasführungsstruktur an der Außenseite, von zumindest einem Oberflächenbereich der ersten gasdichten Umhüllung.

Das Anordnen von zumindest einem äußerem flächigen Gasführungselement an der Außenseite von zumindest einem Oberflächenbereich der ersten gasdichten Umhüllung sorgt dafür, dass beim Aufbringen des zweiten Unterdrucks im Schritt h) ein gleichmäßiges Evakuieren des Inneren der zweiten gasdichten Umhüllung erfolgen kann, was zu einer gleichmäßigen Kompression des Prepreg-Halbzeugs führt.

Weiter vorzugsweise wird vor dem Schritt c) ein zweites Formwerkzeug mit einer Formfläche auf der vom ersten Formwerkzeug abgewandten Seite der inneren Vorrichtung angeordnet. Dieses zweite Formwerkzeug mit seiner Formfläche sorgt zusammen mit der Formfläche des ersten Formwerkzeugs dafür, dass bei der Kompression des Prepreg-Halbzeugs im Schritt h) das zwischen den beiden Formflächen angeordnete Prepreg-Halbzeug die von den Formflächen vorbestimmte Form einnimmt.

Besonders vorteilhaft ist es, wenn die Schritte b) und c) durch Verwenden eines bereits mit einer gasdichten Umhüllung versehenen Flächenmaterials zusammengefasst werden. Hierdurch wird die Verarbeitungsgeschwindigkeit deutlich erhöht.

Der auf die Anordnung gerichtete Teil der Aufgabe wird durch die Vorrichtung zur Herstellung eines Komposit-Formteils aus faserverstärktem Kunststoff nach dem erfindungsgemäßen Verfahren gemäß Anspruch 6 gelöst.

Diese erfindungsgemäße Vorrichtung ist versehen mit einem eine Formfläche aufweisenden ersten Formwerkzeug; einer auf der Formfläche platzierbaren inneren Anordnung aus einem Prepreg-Halbzeug, bestehend aus mit einem Matrixmaterial vorimprägnierten Fasern, und einem das Prepreg-Halbzeug umhüllenden Flächenmaterial, das eine gasdurchlässige, aber das Matrixmaterial zurückhaltende Membran sowie zumindest eine innere flächige Gasführungseinrichtung aufweist, wobei die innere Anordnung von einer ersten gasdichten Umhüllung umgeben ist; einer mit dem Inneren der ersten Umhüllung wirksam verbundenen ersten Unterdruckquelle; einer zweiten gasdichten Umhüllung, die die mit der ersten gasdichten Umhüllung versehene innere Anordnung umgibt; einer mit dem Inneren der zweiten Umhüllung wirksam verbundenen zweiten Unterdruckquelle; und einer die Gesamtanordnung zumindest teilweise umgebenden Heizeinrichtung

Der Aufbau dieser erfindungsgemäßen Vorrichtung ist wesentlich kompakter und einfacher als bei dem DVB-Prozess des Standes der Technik, da kein becherförmiger Stützkörper vorgesehen werden muss. Aus diesem Grund können aus der erfindungsgemäßen Anordnung und konsequenterweise auch mit dem erfindungsgemäßen Verfahren Komposit-Formteile nahezu beliebiger Form und Größe in einer Qualität hergestellt werden, die bislang außerhalb eines Autoklaven nicht erzielt werden konnte.

Die erste Unterdruckquelle und die zweite Unterdruckquelle können auch von einer einzigen Unterdruckquelle, beispielsweise von einer Vakuumpumpe, gebildet sein, wenn in den Unterdruck-Verbindungsleitungen ein entsprechendes Umschaltventil vorgesehen ist, welches das Innere der ersten gasdichten Umhüllung und/oder das Innere der zweiten gasdichten Umhüllung wahlweise mit der Unterdruckquelle verbindet.

Vorteilhafte Weiterbildungen der erfindungsgemäßen Vorrichtung sind in den Ansprüchen 7 bis 10 angegeben. Diese Weiterbildungen weisen die Vorteile auf, die den Vorteilen der entsprechenden Verfahrensschritte gemäß den Ansprüchen 2 bis 5 entsprechen.

In einer bevorzugten Weiterbildung der Vorrichtung ist an der Außenseite, vorzugsweise an den seitlichen Kanten, von zumindest einem Oberflächenbereich der inneren flächigen Gasführungseinrichtung zumindest eine innere Gasführungsstruktur vorgesehen, die mit der inneren flächigen Gasführungseinrichtung und mit der ersten Unterdruckquelle in Fluidverbindung steht.

Eine weitere bevorzugte Ausbildung der Vorrichtung zeichnet sich dadurch aus, dass an der Außenseite von zumindest einem Oberflächenbereich der ersten gasdichten Umhüllung zumindest ein äußeres flächiges Gasführungselement vorgesehen ist, das mit der zweiten Unterdruckquelle in Fluidverbindung steht.

Bei einer anderen bevorzugten Ausführungsform der erfindungsgemäßen Vorrichtung ist auf der vom ersten Formwerkzeug abgewandten Seite der inneren Anordnung ein zweites Formwerkzeug mit einer Formfläche angeordnet. Hierdurch wird die bereits beschriebene dreidimensionale Formgebung für das Komposit-Formteil erzielt.

Vorteilhaft ist auch, wenn das Flächenmaterial an seiner von der Membran abgewandten Außenseite mit einer gasdichten Umhüllung verbunden ist. Durch dieses an sich aus dem Stand der Technik bekannte Flächenmaterial kann der Verarbeitungsprozess deutlich beschleunigt werden.

Bevorzugte Ausführungsbeispiele der Erfindung mit zusätzlichen Ausgestaltungsdetails und weiteren Vorteilen sind nachfolgend unter Bezugnahme auf die beigefügten Zeichnungen näher beschrieben und erläutert.

### KURZE BESCHREIBUNG DER ZEICHNUNGEN

Es zeigt:
- Fig. 1: eine erste Ausführungsform der erfindungsgemäßen Vorrichtung in schematischer Querschnittsdarstellung;
- Fig. 2: eine zweite Ausführungsform der erfindungsgemäßen Vorrichtung in schematischer Querschnittsdarstellung;
- Fig. 3: eine vergrößerte Wiedergabe der Einzelheit III in Fig. 1 und
- Fig. 4: eine vergrößerte Wiedergabe der Einzelheit III bei einer abgewandelten Ausführungsform.

### DARSTELLUNG VON BEVORZUGTEN AUSFÜHRUNGSBEISPIELEN

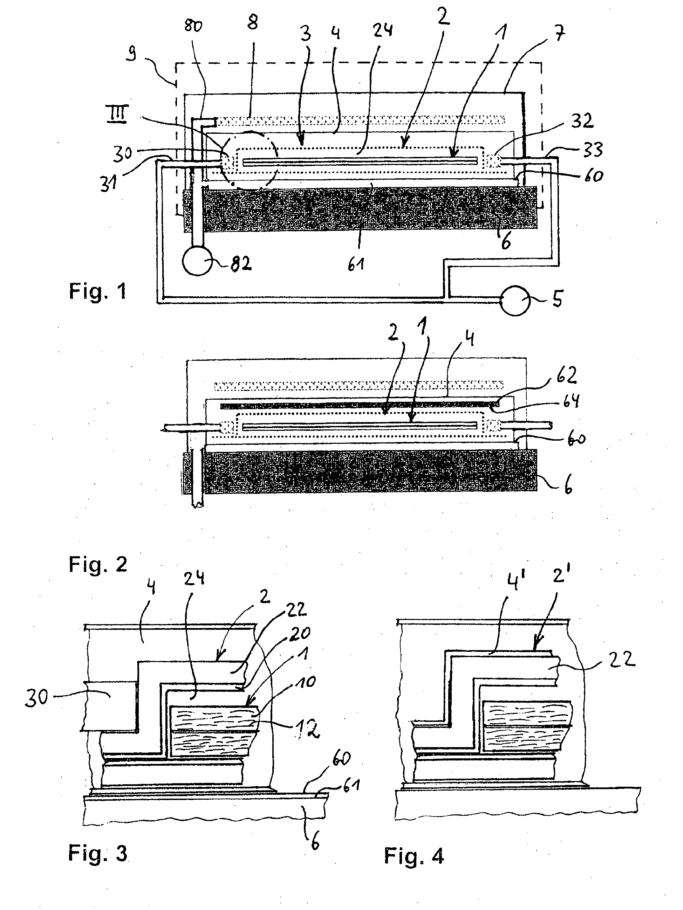

In Fig. 1 und als Detail in Fig. 3 ist eine erste Ausführungsform der erfindungsgemäßen Vorrichtung zur Herstellung eines Komposit-Formteils aus faserverstärktem Kunststoff gezeigt. Ein Prepreg-Halbzeug 1 besteht aus Fasern 12, die mit einem Matrixmaterial 10 vorimprägniert sind. Die Fasern 12 können dabei ein Gewebe, ein Geflecht oder ein beliebiges Gelege bilden. Das Prepreg-Halbzeug 1 ist mit einem flexiblen Flächenmaterial 2 umhüllt, welches eine gasdurchlässige, aber das Matrixmaterial zurückhaltende Membran 20 sowie zumindest eine innere flächige Gasführungseinrichtung 22 aufweist, wie in der vergrößerten Darstellung nach Fig. 3 erkennbar ist. Die Membran 20 ist dem Prepreg-Halbzeug 1 zugewandt und ermöglicht es, dass Gase aus dem von der Membran 20 umschlossenen inneren Raum 24 in die Gasführungseinrichtung 22 austreten können, ohne dass das Matrixmaterial 10 selbst in die Gasführungseinrichtung 22 eintritt und die dort vorgesehenen Gasführungskanäle, durch die das aufgenommene Gas durch das Flächenmaterial strömen kann, verstopft. Das Prepreg-Halbzeug 1 und das es umgebende Flächenmaterial 2 sind Bestandteil einer inneren Anordnung 3.

An gegenüberliegenden Seiten des vom Flächenmaterial 2 umhüllten Prepreg-Halbzeugs 1 ist, außerhalb des Flächenmaterials 2, jeweils eine seitliche Gasführungsstruktur 30, 32 vorgesehen, die aus einem stangenförmigen Körper aus offenporigem Material besteht, der sich in Längsrichtung des Prepreg-Halbzeugs 1, also senkrecht zur Zeichenebene der Fig. 1, erstreckt und über seine Länge mit der Gasführungseinrichtung 22 des Flächenmaterials 2 in Berührung steht, sodass das in der Gasführungseinrichtung 22 des Flächenmaterials 2 transportierte Gas in die jeweilige Gasführungsstruktur 30, 32 eintreten kann. Die seitlichen Gasführungsstrukturen 30,32 können z.B. aus einem dreidimensionalen Gewirke bestehen.

Die innere Anordnung 3 aus Prepreg-Halbzeug 1, Flächenmaterial 2 und den beiden Gasführungsstrukturen 30, 32 ist von einer in sich geschlossenen ersten gasdichten Umhüllung 4 umgeben. Diese gasdichte Umhüllung ist flexibel und bevorzugt als verschließbarer Beutel ausgebildet.

Jeweils eine mit der ersten inneren Gasführungsstruktur 30 bzw. der zweiten inneren Gasführungsstruktur 32 verbundene Unterdruckleitung 31, 33 ist abgedichtet durch die gasdichte Umhüllung 4 hindurchgeführt und an eine erste Unterdruckquelle 5 angeschlossen.

Die gesamte mit der ersten gasdichten Umhüllung 4 versehene innere Anordnung 3 ist auf einer Formfläche 60 eines ersten Formwerkzeugs 6 positioniert und liegt dort auf. Die Formfläche 60 ist als Negativform des zu bildenden Komposit-Formteils ausgeformt und weist ebenfalls eine Gasführungsstruktur 61 auf, die es verhindert, dass sich Gaspolster zwischen der ersten gasdichten Umhüllung 4 und der Formfläche 60 bilden können.

Eine zweite gasdichte Umhüllung 7 umgibt die mit der ersten gasdichten Umhüllung 4 versehene innere Anordnung 3 und die Formfläche 60 und ist am ersten Formwerkzeug 6 abdichtend angebracht. Alternativ kann die zweite gasdichte Umhüllung 7 auch das gesamte erste Formwerkzeug 6 mit umschließen.
Auf der vom ersten Formwerkzeug 6 abgewandten Seite der die innere Anordnung 3 umgebenden ersten gasdichten Umhüllung 4 ist ein äußeres flächiges Gasführungselement 8 angebracht, das sich im wesentlichen über die gesamte Breite und Länge zumindest des Prepreg-Halbzeugs 1 erstreckt. Dieses äußere flächige Gasführungselement 8 ist über eine abgedichtet aus der zweiten gasdichten Umhüllung 7 herausgeführte Unterdruckleitung 80 mit einer zweiten Unterdruckquelle 82 verbunden.

Die gesamte in Fig. 1 gezeigte Anordnung kann in einem - nicht gezeigten-Wärmeofen platziert werden oder mit geeigneten - nicht gezeigten-Heizdecken umschlossen oder abgedeckt werden. Der Ofen bzw. die Heizdecken bilden dann eine in Fig. 1 nur schematische angedeutete Heizeinrichtung 9.

Die in Fig. 2 dargestellte Vorrichtung entspricht im Prinzip der in Fig. 1 gezeigten Vorrichtung, sodass die Beschreibung der Fig. 1 auch für die Vorrichtung der Fig. 2 zutrifft. Abweichend zur Darstellung in Fig. 1 ist bei der Ausführungsform der Fig. 2 ein zweites Formwerkzeug 62 vorgesehen, das im Inneren der ersten gasdichten Umhüllung 4 auf der vom ersten Formwerkzeug 6 abgewandten Seite des mit dem Flächenmaterial 2 umhüllten Prepreg-Halbzeugs 1 angeordnet ist. Das zweite Formwerkzeug 62 weist eine der Formfläche 60 des ersten Formwerkzeugs 6 angepasste Formfläche 64 auf, die eine Negativform der anderen Oberflächenseite des zu fertigenden Komposit-Formteils bestimmt.

In Fig. 4 ist eine alternative Ausgestaltungsform des Flächenmaterials 2' gezeigt, welches im Grundsatz dem in Verbindung mit Fig. 3 beschriebenen Aufbau entspricht, das aber an seiner Außenseite bereits mit einer gasdichten Umhüllung 4' versehen ist. Der von der ersten Unterdruckquelle 5 aufgebrachte Unterdruck wird bei dieser Anordnung unmittelbar auf die innere flächige Gasführungseinrichtung 22 aufgebracht.

Die Vorgehensweise bei dem erfindungsgemäßen Verfahren zur Herstellung eines Komposit-Formteils aus faserverstärktem Kunststoff wird nachstehend anhand der Darstellung der Fig. 1 näher beschrieben.

Zunächst wird das Prepreg-Halbzeug 1, das in den in den Figuren gezeigten Beispielen aus zwei aufeinander liegenden Platten besteht, das aber auch aus einer oder mehreren Platten bestehen kann, mit dem flexiblen Flächenmaterial 2 umhüllt, das beispielsweise als verschließbarer Beutel ausgebildet ist. Dabei ist die Membran 20 des Flächenmaterials 2 dem Prepreg-Halbzeug 1 zugewandt. Dann wird diese innere Anordnung 3 aus Prepreg-Halbzeug 1 und Flächenmaterial 2 zunächst provisorisch auf der Formfläche 60 des ersten Formwerkzeugs 6 platziert. Anschließend wird die innere flächige Gasführungseinrichtung 22 des flexiblen Flächenmaterials 2, die beispielsweise aus einem Gewebe besteht, unmittelbar (Fig. 4) oder mittelbar über die inneren seitlichen Gasführungsstrukturen 30, 32 (Figuren 1 bis 3) mit der ersten Unterdruckquelle 5 in Fluidverbindung gebracht.

Anschließend kann (Ausführung der Fig. 2) noch ein zweites Formwerkzeug 62 auf der vom ersten Formwerkzeug 6 abgewandten Seite der inneren Anordnung 3 aus Prepreg-Halbzeug 1 und Flächenmaterial 2 platziert werden.

Die innere Anordnung 3 aus Prepreg-Halbzeug 1, Flächenmaterial 2, gegebenenfalls dem zweiten Formwerkzeug 62 und gegebenenfalls den seitlichen inneren Gasführungsstrukturen 30, 32 wird anschließend mit der ersten gasdichten Umhüllung 4 abgedichtet umschlossen. Lediglich die Unterdruckleitungen 31 und 33 sind aus der ersten gasdichten Umhüllung 4 herausgeführt.

Jetzt wird die mit der ersten gasdichten Umhüllung 4 versehene innere Anordnung 3 endgültig auf der Formfläche 60 des ersten Formwerkzeugs 6 platziert.

Auf der vom ersten Formwerkzeug 6 abgewandten Seite der inneren gasdichten Unhüllung 4 wird nun das äußere flächige Gasführungselement 8 positioniert und anschließend wird die gesamte Anordnung von einer weiteren gasdichten Umhüllung, nämlich der zweiten gasdichten Umhüllung 7, umschlossen, die auch das erste Formwerkzeug 6 zumindest teilweise mit umschließt.

Das äußere flächige Gasführungselement 8 und die Gasführungsstruktur 61 in der Formfläche 60 des ersten Formwerkzeugs 6 werden mittels der Unterdruckleitung 80 an die zweite Unterdruckquelle 82 angeschlossen.

Mit dem so geschaffenen Aufbau werden jetzt die folgenden Verfahrensschritte durchgeführt:

### 1. Phase

Zunächst wird von der ersten Unterdruckquelle 5 ein erster Unterdruck auf die innere flächige Gasführungseinrichtung 22 und das Innere der ersten gasdichten Umhüllung 4 aufgebracht. Zeitgleich wird die Gesamtanordnung mittels der Heizeinrichtung 9 auf eine erste vorgegebene Temperatur erwärmt (eine typische Temperatur ist z.B. 60°C). Der Unterdruck im Inneren der ersten gasdichten Umhüllung 4 wird dabei aufrechterhalten. In dieser ersten Phase wird die eingeschlossene Luft an den Rändern des Aufbaus abgesaugt.

### 2. Phase

Anschließend wird mittels der zweiten Unterdruckquelle 82 auf das Innere der zweiten gasdichten Umhüllung 7 ein zweiter Unterdruck aufgebracht, der höher ist, als der erste Unterdruck. Die erste vorgegebene Temperatur wird in dieser zweiten Phase aufrechterhalten. Nachfolgend kann der im Inneren der ersten gasdichten Umhüllung 4 herrschende Unterdruck noch reduziert werden. Die erste vorgegebene Temperatur bleibt in dieser 2. Phase weiter aufrechterhalten. Das Merkmal dieser Phase besteht darin, dass erstens das Matrix-System seine minimale Viskosität erreicht hat und zweitens, die erste Umhüllung 4 nicht mehr den Lagenaufbau komprimiert, weil es von der zweiten Umhüllung 7 angezogen wird. Damit ist gewährleistet, dass die eingeschlossene Luft horizontal zwischen den einzelnen Prepreg-Lagen und über die Kanten des Prepreg-Halbzeugs abgesaugt werden kann. Zusätzlich werden auch flüchtige Bestandteile flächig durch die Membran hindurch abgesaugt.

### 3. Phase

Anschließend wird mittels der ersten Unterdruckquelle 5 im Innern der ersten gasdichten Umhüllung 4 das Vakuum erhöht. Das Innere der zweiten Umhüllung 7 wird von der zweiten Unterdruckquelle 82 abgekoppelt und dem Umgebungsdruck ausgesetzt. Die gesamte Anordnung wird in dieser Phase mittels der Heizeinrichtung 9 auf eine zweite vorgegebene Temperatur gebracht und dort gehalten, wobei die zweite vorgegebene Temperatur höher ist als die erste vorgegebene Temperatur. Auf diese Weise wird in dieser Phase das Prepreg-Halbzeug 1 durch den auf das Prepreg-Halbzeug einwirkenden Unterdruck verdichtet und härtet unter der Einwirkung der zweiten vorgegebenen Temperatur aus. Da das Prepreg-Halbzeug 1 während dieses vierten Verfahrensschrittes von der kollabierenden zweiten gasdichten Umhüllung 7 gegen die Formfläche 60 des ersten Formwerkzeugs 6 gepresst wird, nimmt es die Form der Formfläche 60 an.

Wenn, wie im Fall der Fig. 2, auch das zweite Formwerkzeug 62 vorgesehen ist, wird dieses zweite Formwerkzeug 62 von der kollabierenden zweiten gasdichten Umhüllung 7 gegen das Prepreg-Halbzeug 1 gepresst, so dass das Prepreg-Halbzeug 1 sowie das dieses umgebende flexible Flächenmaterial 2 zwischen den beiden Formflächen 60 und 64 eingezwängt ist. Auf diese Weise nimmt das Prepreg-Halbzeug im dritten Verfahrensschritt die von den beiden Formflächen 60, 64 bestimmte Gestalt ein und behält diese nach dem Aushärten, also nach dem Ablauf der dritten Phase, bei.

Bezugszeichen in den Ansprüchen, der Beschreibung und den Zeichnungen dienen lediglich dem besseren Verständnis der Erfindung und sollen den Schutzumfang nicht einschränken.

### Bezugszeichenliste

Es bezeichnen:
- 1: Prepreg-Halbzeug
- 2: Flächenmaterial
- 3: innere Anordnung
- 4; 4': erste gasdichte Umhüllung
- 5: erste Unterdruckquelle
- 6: erstes Formwerkzeug
- 7: zweite gasdichte Umhüllung
- 8: äußeres flächiges Gasführungselement
- 9: Heizeinrichtung
- 10: Matrixmaterial
- 12: Fasern
- 20: Membran
- 22: innere flächige Gasführungseinrichtung
- 24: innerer Raum
- 30, 32: innere seitliche Gasführungsstruktur
- 31: Unterdruckleitung
- 33: Unterdruckleitung
- 60: Formfläche
- 61: Gasführungsstruktur
- 62: zweites Formwerkzeug
- 64: Formfläche
- 80: Unterdruckleitung
- 82: zweite Unterdruckquelle

## Patentansprüche

1. Verfahren zur Herstellung eines Komposit-Formteils aus faserverstärktem Kunststoff mit den Schritten:
a) Bereitstellen eines Prepreg-Halbzeugs (1) bestehend aus mit einem Matrixmaterial (10) vorimprägnierten Fasern (12);
b) Umhüllen des Prepreg-Halbzeugs (1) mit einem flexiblen Flächenmaterial (2; 2'), das eine gasdurchlässige, aber das Matrixmaterial zurückhaltende Membran (20) sowie zumindest eine innere flächige Gasführungseinrichtung (22) aufweist;
c) Umhüllen der aus Prepreg-Halbzeug (1) und Flächenmaterial (2, 2') gebildeten inneren Anordnung (3) mit einer ersten gasdichten Umhüllung (4; 4');
d) Positionieren der mit der ersten gasdichten Umhüllung (4; 4') versehenen inneren Anordnung (3) auf einer Formfläche (60) eines ersten Formwerkzeugs (6);
e) Umhüllen der mit der ersten gasdichten Umhüllung (4; 4') versehenen inneren Anordnung (3) und der Formfläche (60) mit einer zweiten gasdichten Umhüllung (7);
f) Aufbringen eines ersten Unterdrucks auf die innere flächige Gasführungseinrichtung (22) und das Innere der ersten gasdichten Umhüllung (4; 4');
g) Erwärmen der gesamten Anordnung für eine erste vorgegebene Zeit unter Einwirkung einer ersten vorgegebenen Temperatur;
h) Aufbringen eines zweiten Unterdrucks auf das Innere der zweiten gasdichten Umhüllung (7); und
i) Erwärmen der gesamten Anordnung für eine zweite vorgegebene Zeit unter Einwirken einer zweiten vorgegebenen Temperatur.

2. Verfahren nach Anspruch 1,
**dadurch gekennzeichnet,**
**dass** nach dem Schritt b) der folgende Verfahrensschritt durchgeführt wird:
b') Anordnen von zumindest einer inneren Gasführungsstruktur (30, 32) an der Außenseite, vorzugsweise an den seitlichen Kanten, von zumindest einem Oberflächenbereich der inneren flächigen Gasführungseinrichtung (22).

3. Verfahren nach Anspruch 1 oder 2,
**dadurch gekennzeichnet,**
**dass** nach dem Schritt d) der folgende Schritt durchgeführt wird:
d') Anordnen von zumindest einem äußeren flächigen Gasführungselement (8) an der Außenseite von zumindest einem Oberflächenbereich der ersten gasdichten Umhüllung (4).

4. Verfahren nach einem der vorhergehenden Ansprüche,
**dadurch gekennzeichnet,**
**dass** vor dem Schritt c) ein zweites Formwerkzeug (62) mit einer Formfläche (64) auf der vom ersten Formwerkzeug (6) abgewandten Seite der inneren Anordnung (3)angeordnet wird.

5. Verfahren nach einem der Ansprüche 1 bis 3,
**dadurch gekennzeichnet,**
**dass** die Schritte b) und c) durch Verwenden eines bereits mit einer gasdichten Umhüllung (4') versehenen Flächenmaterials (2') zusammengefasst werden.

6. Vorrichtung zur Herstellung eines Komposit-Formteils aus faserverstärktem Kunststoff nach einem Verfahren gemäß einem der vorhergehenden Ansprüche mit:
- einem eine Formfläche (60) aufweisenden ersten Formwerkzeug (6);
- einer auf der Formfläche (60) platzierbaren inneren Anordnung (3) aus einem Prepreg-Halbzeug (1), bestehend aus mit einem Matrixmaterial (10) vorimprägnierten Fasern (12), und einem das Prepreg-Halbzeug (1) umhüllenden flexiblen Flächenmaterial (2; 2'), wobei die innere Anordnung (3) von einer ersten gasdichten Umhüllung (4; 4') umgeben ist;
- einer mit dem Inneren der ersten Umhüllung (4; 4') wirksam verbundenen ersten Unterdruckquelle (5);
- einer zweiten gasdichten Umhüllung (7), die die mit der ersten gasdichten Umhüllung (4; 4') versehene innere Anordnung (3) umgibt;
- einer mit dem Inneren der zweiten Umhüllung (7) wirksam verbundenen zweiten Unterdruckquelle (9); und
- einer die Gesamtanordnung zumindest teilweise umgebenden Heizeinrichtung (100), **gekennzeichnet dadurch, dass** das flexible Flächenmaterial (2;2') eine gasdurchlässige, aber das Matrixmaterial zurückhaltende Membran (20) sowie zumindest eine innere flächige Gasführungseinrichtung (22) aufweist.

7. Vorrichtung nach Anspruch 6,
**dadurch gekennzeichnet,**
**dass** an der Außenseite, vorzugsweise an den seitlichen Kanten, von zumindest einem Oberflächenbereich der inneren flächigen Gasführungseinrichtung (22) zumindest eine innere Gasführungsstruktur (30, 32) vorgesehen ist, die mit der inneren flächigen Gasführungseinrichtung (22) und mit der ersten Unterdruckquelle (5) in Fluidverbindung steht.

8. Vorrichtung nach Anspruch 6 oder 7,
**dadurch gekennzeichnet,**
**dass** an der Außenseite von zumindest einem Oberflächenbereich der ersten gasdichten Umhüllung (4; 4') zumindest ein äußeres flächiges Gasführungselement (8) vorgesehen ist, das mit der zweiten Unterdruckquelle (9) in Fluidverbindung steht.

9. Vorrichtung nach Anspruch 6, 7 oder 8,
**dadurch gekennzeichnet,**
**dass** auf der vom ersten Formwerkzeug (6) abgewandten Seite der inneren Anordnung (3) ein zweites Formwerkzeug (62) mit einer Formfläche (64) angeordnet ist.

10. Vorrichtung nach einem der Ansprüche 6 bis 8,
**dadurch gekennzeichnet,**
**dass** das Flächenmaterial (2') an seiner von der Membran (20) abgewandten Außenseite mit einer gasdichten Umhüllung (4') verbunden ist.

## Claims

1. Method for producing a composite moulded part made of fibre-reinforced plastic, having the steps of:
a) preparing a pre-preg preform (1) consisting of fibres (12) pre-impregnated with a matrix material (10);
b) enveloping the pre-preg preform (1) with a flexible sheet-like material (2; 2') having a membrane (20) which is gas-permeable but which retains the matrix material, and having at least one inner sheet-like gas-conducting device (22);
c) enveloping the inner arrangement (3) formed from the pre-preg preform (1) and the sheet-like material (2; 2') with a first gas-tight envelopment (4; 4');
d) positioning the inner arrangement (3), provided with the first gas-tight envelopment (4; 4'), on a mould surface (60) of a first mould tool (6);
e) enveloping the inner arrangement (3), provided with the first gas-tight envelopment (4; 4'), and the mould surface (60) with a second gas-tight envelopment (7);
f) applying a first vacuum to the inner sheet-like gas-conducting device (22) and the inside of the first gas-tight envelopment (4; 4');
g) heating the entire arrangement for a first predetermined time with application of a first predetermined temperature;
h) applying a second vacuum to the inside of the second gas-tight envelopment (7); and
i) heating the entire arrangement for a second predetermined time with application of a second predetermined temperature.

2. Method according to Claim 1,
**characterized in that,**
after step b), the following method step is carried out:
b') arranging at least one inner gas-conducting structure (30, 32) on the outer side, preferably on the lateral edges, of at least one surface region of the inner sheet-like gas-conducting device (22).

3. Method according to Claim 1 or 2,
**characterized in that,**
after step d), the following step is carried out:
d') arranging at least one outer sheet-like gas-conducting element (8) on the outer side of at least one surface region of the first gas-tight envelopment (4).

4. Method according to one of the preceding claims,
**characterized in that,**
before step c), a second mould tool (62) having a mould surface (64) is arranged on that side of the inner arrangement (3) which faces away from the first mould tool (6).

5. Method according to one of Claims 1 to 3,
**characterized in that**
steps b) and c) are conflated by using a sheet-like material (2') which is already provided with a gas-tight envelopment (4').

6. Device for producing a composite moulded part made of fibre-reinforced plastic using a method according to one of the preceding claims, having:
- a first mould tool (6) having a mould surface (60) ;
- an inner arrangement (3), which can be placed on the mould surface (60) and is made up of a prepreg preform (1), consisting of fibres (12) pre-impregnated with a matrix material (10), and a flexible sheet-like material (2; 2') enveloping the pre-preg preform (1), wherein the inner arrangement (3) is surrounded by a first gas-tight envelopment (4; 4');
- a first vacuum source (5) operatively connected to the inside of the first envelopment (4; 4');
- a second gas-tight envelopment (7) which surrounds the inner arrangement (3) provided with the first gas-tight envelopment (4; 4');
- a second vacuum source (9) operatively connected to the inside of the second envelopment (7); and
- a heating device (100) which at least partially surrounds the entire arrangement, **characterized in that** the flexible sheet-like material (2; 2') has a membrane (20) which is gas-permeable but which retains the matrix material, and at least one inner sheet-like gas-conducting device (22).

7. Device according to Claim 6,
**characterized in that**
at least one inner gas-conducting structure (30, 32), which is fluidically connected to the inner sheet-like gas-conducting device (22) and to the first vacuum source (5), is provided on the outer side, preferably on the lateral edges, of at least one surface region of the inner sheet-like gas-conducting device (22).

8. Device according to Claim 6 or 7,
**characterized in that**
at least one outer sheet-like gas-conducting element (8), which is fluidically connected to the second vacuum source (9), is provided on the outer side of at least one surface region of the first gas-tight envelopment (4; 4').

9. Device according to Claim 6, 7 or 8,
**characterized in that**
a second mould tool (62) having a mould surface (64) is arranged on that side of the inner arrangement (3) which faces away from the first mould tool (6).

10. Device according to one of Claims 6 to 8,
**characterized in that**
the sheet-like material (2') is connected to a gas-tight envelopment (4') on the outer side of the former facing away from the membrane (20).

## Revendications

1. Procédé de fabrication d'une pièce moulée composite en matière synthétique renforcée de fibres, le procédé présentant les étapes qui consistent à :
a) préparer une ébauche pré-imprégnée (1) constituée de fibres (12) pré-imprégnées d'un matériau de matrice (10),
b) englober l'ébauche pré-imprégnée (1) dans un matériau plat flexible (2; 2') qui présente une membrane (20) perméable aux gaz mais retenant le matériau de matrice ainsi qu'au moins un dispositif (22) plat intérieur d'amenée de gaz,
c) englober l'ensemble intérieur (3) formé de l'ébauche pré-imprégnée (1) et du matériau plat (2, 2') par une première enveloppe (4; 4') étanche aux gaz,
d) placer l'ensemble intérieur (3) doté de la première enveloppe (4; 4') étanche aux gaz sur une surface de moulage (60) d'un premier outil de moulage (6),
e) envelopper l'ensemble intérieur (3) doté de la première enveloppe (4 4') étanche aux gaz et de la surface de moulage (60) par une deuxième enveloppe (7) étanche aux gaz,
f) appliquer une première dépression sur le dispositif (22) plat intérieur d'amenée de gaz et sur l'intérieur de la première enveloppe (4; 4') étanche aux gaz,
g) chauffer l'ensemble pendant une première durée prédéterminée en appliquant une première température prédéterminée,
h) appliquer une deuxième dépression sur l'intérieur de la deuxième enveloppe (7) étanche aux gaz et
i) chauffer l'ensemble pendant une deuxième durée prédéterminée en faisant agir une deuxième température prédéterminée.

2. Procédé selon la revendication 1, **caractérisé en ce qu'**après l'étape b), l'étape de procédé suivante est exécutée :
b') placer au moins une structure intérieure (30, 32) d'amenée de gaz sur le côté extérieur et de préférence sur les bords latéraux d'au moins une partie de la surface du dispositif intérieur plat (22) d'amenée de gaz.

3. Procédé selon les revendications 1 ou 2, **caractérisé en ce qu'**après l'étape d), l'étape suivante est exécutée :
d') placer au moins un élément extérieur plat (8) d'amenée de gaz sur le côté extérieur d'au moins une partie de la surface de la première enveloppe (4) étanche aux gaz.

4. Procédé selon l'une des revendications précédentes, **caractérisé en ce qu'**avant l'étape c), un deuxième outil de moulage (62) qui présente une surface de moulage (64) est placé sur le côté de l'ensemble intérieur (3) non tourné vers le premier outil de moulage (6).

5. Procédé selon l'une des revendications 1 à 3, **caractérisé en ce que** les étapes b) et c) sont rassemblées en recourant à un matériau plat (2') déjà à doté d'une enveloppe (4') étanche aux gaz.

6. Dispositif de fabrication d'une pièce moulée composite en matière synthétique renforcée de fibres par un procédé selon l'une des revendications précédentes, le dispositif présentant :
- un premier outil de moulage (6) qui présente une surface de moulage (60),
- un ensemble intérieur (3) constitué d'une ébauche pré-imprégnée (1) constituée de fibres (12) pré-imprégnées d'un matériau de matrice et d'un matériau plat flexible (2, 2') qui englobe l'ébauche pré-imprégnée (1) et apte à être placée sur la surface de moulage (60),
l'ensemble intérieur (3) étant entouré par une première enveloppe (4; 4') étanche aux gaz,
- une première source de dépression (5) raccordée fonctionnellement à l'intérieur de la première enveloppe (4; 4'),
- une deuxième enveloppe (7) étanche aux gaz qui entoure l'ensemble intérieur (3) doté de la première enveloppe (4; 4') étanche aux gaz,
- une deuxième source de dépression (9) raccordée fonctionnellement à l'intérieur de la deuxième enveloppe (7) et
- un dispositif de chauffage (100) qui entoure au moins une partie de l'ensemble,
**caractérisé en ce que**
le matériau plat flexible (2; 2') présente une membrane (20) étanche aux gaz mais retenant le matériau de matrice ainsi qu'au moins un dispositif intérieur plat (22) d'amenée de gaz.

7. Dispositif selon la revendication 6, **caractérisé en ce qu'**au moins une structure intérieure (30, 32) d'amenée de gaz qui est en liaison d'écoulement avec le dispositif intérieur plat (22) d'amenée de gaz et avec la première source de dépression (5) est prévue sur le côté extérieur et de préférence sur les bords latéraux d'au moins une partie de la surface du dispositif intérieur plat (22) d'amenée de gaz.

8. Dispositif selon les revendications 6 ou 7, **caractérisé en ce qu'**au moins un élément extérieur plat (8) d'amenée de gaz qui est en liaison d'écoulement avec la deuxième source de dépression (9) est prévu sur le côté extérieur d'au moins une partie de la surface de la première enveloppe (4; 4') étanche aux gaz.

9. Dispositif selon les revendications 6, 7 ou 8, **caractérisé en ce qu'**un deuxième outil de moulage (62) présentant une surface de moulage (64) est disposé sur le côté de l'ensemble intérieur (3) non tourné vers le premier outil de moulage (6).

10. Dispositif selon l'une des revendications 6 à 8, **caractérisé en ce que** le matériau plat (2') est raccordé à une enveloppe (4') étanche aux gaz sur son côté extérieur non tourné vers la membrane (20').
